# FASCICULE DE BREVET EUROPEEN

(11) **EP 3 384 656 B1**
(45) Date de publication et mention de la délivrance du brevet: **14.04.2021**
(21) Numéro de dépôt: 16819965.1
(22) Date de dépôt: 22.11.2016
(51) Int. Cl.: H04L 29/06, H04W 4/14, H04W 80/10

(54) **PROCÉDÉ DE GESTION DES SMS DANS UN RÉSEAU IMS ET PASSERELLE METTANT EN OEUVRE UN TEL PROCÉDÉ**
VERFAHREN ZUR VERWALTUNG VON SMS-TEXTNACHRICHTEN INNERHALB EINES IMS-NETZWERKS UND GATEWAY ZUR IMPLEMENTIERUNG SOLCH EINES VERFAHREN
METHOD FOR MANAGING SMS TEXT MESSAGES WITHIN AN IMS NETWORK AND GATEWAY IMPLEMENTING SUCH A METHOD

(30) Priorité: 30.11.2015 FR 1561556
(43) Date de publication de la demande: 10.10.2018
(73) Titulaire: ORANGE, 75015 Paris (FR)
(72) Inventeur: BOUVET, Bertrand, 22700 Perros Guirec (FR)
(74) Mandataire: Cabinet Beau de Loménie
(86) Numéro de dépôt international: PCT/FR2016/053039
(87) Numéro de publication internationale: WO 2017/093632

(56) Documents cités:
- WO-A2-2012/164551
- US-A1- 2005 282 565
- US-A1- 2006 046 752
- Gonzalo Camarillo ET AL: "Chapter 5 Session Control in the IMS" In: "The 3G IP multimedia subsystem (IMS) : merging the Internet and the cellular worlds", 24 août 2011 (2011-08-24), WILEY, CHICHESTER, XP055340567, ISBN: 978-0-470-51662-1 vol. 23 Chapter 5; page 597f; figures 5.21, 5.24
- ALCATEL-LUCENT: "IMS entity to retrieve location information", 3GPP DRAFT; S2-111720 NETLOC - WHICH IMS ENTITY TO RETRIEVE LOCATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Bratislava; 20110411, 6 avril 2011 (2011-04-06), XP050524623,

## Description

### Arrière-plan

La présente invention se situe dans le domaine des télécommunications et plus particulièrement dans le domaine des réseaux mobiles 4G/3G/2G et WiFi pour les services d'envoi et de réception de messages courts SMS (en anglais « Short Message Service »).

En ce qui concerne les réseaux d'accès 2G et 3G, le service de téléphonie et le service d'envoi et de réception de SMS sont disponibles en mode circuit (en anglais mode CS « Circuit Switch »).

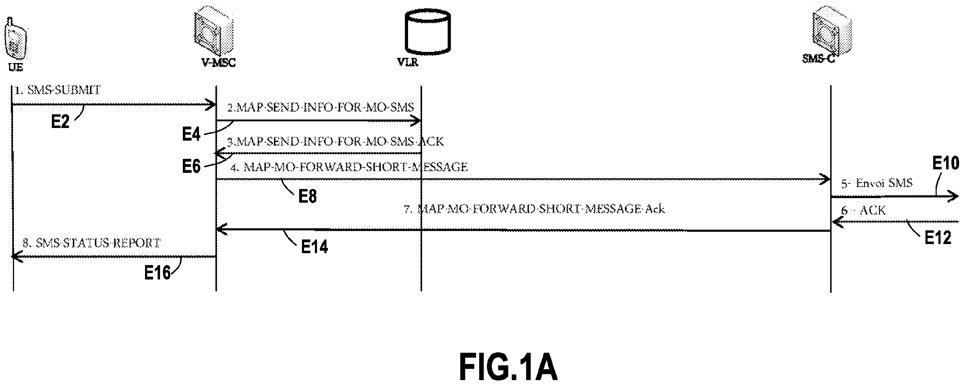

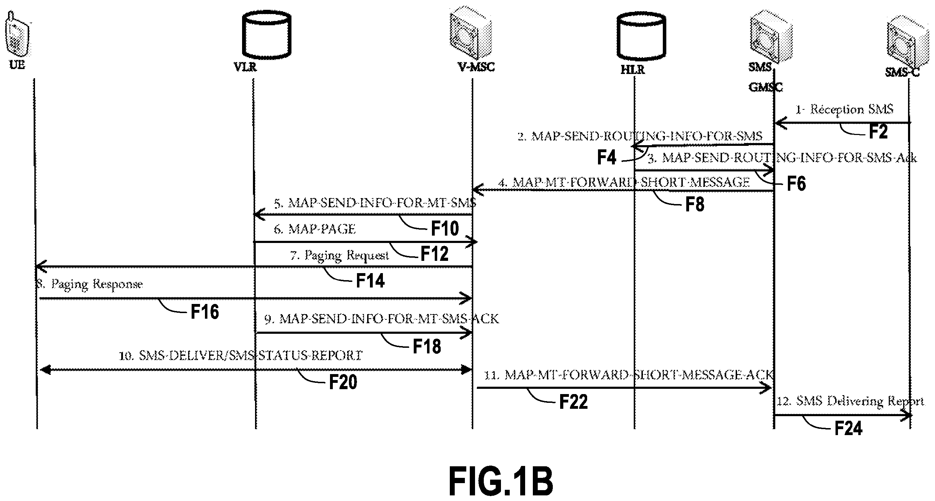

Les figures 1A et 1B illustrent les procédures d'envoi et de réception de SMS en mode circuit sur réseau d'accès cellulaire 2G/3G. Sur ces figures, on représente schématiquement :
- Un terminal mobile UE ;
- Un centre V-MSC de commutation mobile correspondant à la localisation courante de ce terminal (en anglais visited Mobile Switching Center), ci-après « V-MSC » ;
- Un registre VLR de localisation de visiteurs (en anglais Visitor Location Register), ci-après « VLR » ;
- Un registre HLR de localisation d'origine (en anglais Home Location Register), ci-après « HLR » ;
- Un centre SMS-C de service de message court (en anglais Short Message Service Center), ci-après « S-MSC »;
- Une passerelle GMSC de SMS, ci-après « passerelle GMSC ».

L'envoi d'un SMS par un terminal mobile UE (service SM-MO « Short Message Mobile Originated») est maintenant décrit en référence à la figure 1A.

On suppose ici que le terminal mobile UE s'est déjà attaché au réseau cellulaire via la procédure IMSI Attach, et en particulier que le VLR a téléchargé le profil du terminal UE depuis le HLR.

Au cours d'une étape E2, le terminal UE envoie le SMS au V-MSC en utilisant la commande SMS-SUBMIT.

Au cours d'une étape E4, le V-MSC transmet au VLR auquel il est associé (ci-après « registre VLR ») un message MAP-SEND-INFO-FOR-MO-SMS pour lui demander le numéro MSISDN du terminal UE et pour vérifier, à partir du profil de l'utilisateur de ce terminal, qu'aucune restriction n'est imposée à cet utilisateur.

Le VLR retourne un acquittement positif MAP-SEND-INFO-FOR-MO-SMS-ACK au V-MSC au cours d'une étape E6.

Si cet acquittement est positif, le V-MSC envoie (étape E8) le message SMS au SMS-C en utilisant le message MAP-MO-FORWARD-SHORT-MESSAGE. Ce message contient le numéro MISDN du terminal UE, le numéro MSISDN du destinataire saisi par l'utilisateur, le numéro du SMS-C mémorisé dans la carte SIM du terminal UE, et les caractères du message SMS à transmettre.

Le SMS-C mémorise le message et les numéros MSISDN de l'expéditeur et du destinataire puis envoie, au cours d'une étape E10, le SMS vers le destinataire. Il reçoit une réponse positive d'envoi du SMS (étape E12).

Au cours d'une étape E14, le SMS-C inclut le rapport d'émission dans un message MAP-MO-FORWARD-SHORT-MESSAGE-ACK à destination du V-MSC et le V-MSC retourne un message SMS-STATUS-REPORT au terminal mobile UE (étape E16).

La réception d'un SMS par un terminal mobile UE en provenance du SMS-C (service SM-MT « Short Message Mobile Terminated ») est décrite en référence à la figure 1B.

Au cours d'une étape F2, la passerelle GMSC reçoit un message SMS en provenance d'un centre SMS-C.

Au cours d'une étape F4, la passerelle GMSC demande au HLR des informations de routage du SMS via la requête MAP-SEND-ROUTING-INFO-FOR-SMS. Cette requête contient en particulier le numéro MSISDN du terminal destinataire.

Au cours d'une étape F6, le HLR retourne à la passerelle GMSC via le message MAP-SEND-ROUTING-INFO-FOR-SMS-ACK les informations de routage correspondant à l'adresse du V-MSC en charge du terminal destinataire, ainsi que le numéro IMSI de ce terminal destinataire.

Au cours d'une étape F8, la passerelle GMSC envoie le message MAP-MT-FORWARD-SHORT-MESSAGE au V-MSC.

Au cours d'une étape F10, le V-MSC émet une requête MAP-SEND-INFO-FOR-MT-SMS à son VLR local en vue d'obtenir des informations relatives au destinataire, cette requête comportant le numéro IMSI du terminal destinataire.

Le VLR identifie, à partir du numéro IMSI, la zone LA de localisation (en anglais Location Area) du terminal destinataire.

Au cours d'une étape F12, le VLR initie une procédure de paging (MAP-PAGE) consistant à effectuer une recherche sur l'ensemble de la zone où est susceptible de se trouver le terminal destinataire du SMS. Si le VLR ne connaît pas l'identité du destinataire, un message MAP-SEARCH-FOR-SUBSCRIBER est émis afin de lancer la procédure de recherche sur toutes les localisations LA dépendant du V-MSC. Dans le cas de la figure 1B, l'identification du terminal destinataire est supposée connue du V-MSC. La procédure de paging est initiée par le VLR mais effectuée par le V-MSC.

Le V-MSC effectue la procédure de paging sur la zone de localisation LA du destinataire au cours d'une étape F14 ; le terminal destinataire répond positivement à cette procédure de paging au cours d'une étape F16.

Au cours d'une étape F18, le VLR retourne une réponse MAP-SEND-INFO-FOR-MT-SMS-ACK au V-MSC, autorisant ce dernier à relayer le SMS vers le terminal destinataire.

Au cours d'une étape F20, le V-MSC achemine le SMS au terminal mobile destinataire via le message SMS-DELIVER et reçoit un rapport d'acquittement SMS-STATUS-REPORT.

Au cours d'une étape F22, le V-MSC inclut le rapport de livraison du SMS au terminal destinataire dans la réponse MAP-MT-FORWARD-SHORT-MESSAGE-ACK retournée à la passerelle GMSC.

La passerelle SMS GMSC transfert ce rapport au SMS-C au cours d'une étape F24.

Lorsque le terminal mobile UE est connecté sur un réseau cellulaire 4G, et que le service VoLTE (Voice Over Long Term Evolution) n'est pas disponible soit parce que l'opérateur télécom ne dispose pas de ce service ou bien que l'abonnement du client n'autorise pas ce service ou bien que le terminal du client ne dispose pas encore de cette fonctionnalité), il utilise le mode de repli CS FallBack pour recevoir et émettre des appels téléphoniques.

Conformément à ce mode, le réseau 4G demande au terminal mobile UE de basculer, lorsqu'un tel réseau est disponible, sur un réseau de type 2G ou 3G pour traiter l'appel. Puis en fin de communication le terminal mobile UE rebascule sur le réseau 4G si celui-ci est disponible.

Cette procédure de repli CS Fallback est relativement lourde et en tout état de cause mal adaptée pour l'envoi et la réception de SMS.

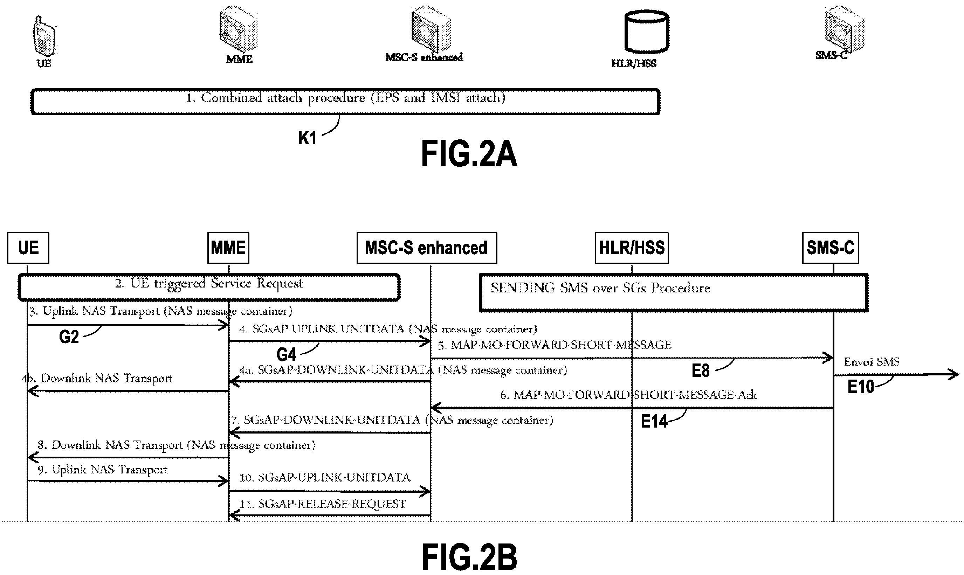

De façon connue et comme représenté à la figure 2A, le terminal sous couverture 4G demande, pour l'envoi et réception de SMS, un attachement réseau en mode « Combined IMSI Attach» (étape K1).

Sur cette figure, on a représenté :
- Une entité de gestion de la mobilité (en anglais Mobility Management Entity), ci-après « MME » ;
- Un centre de communication mobile évolué (en anglais enhanced Mobile Switching Center »), ci-après MSC-e.

Conformément à la procédure Combined IMSI Attach, lorsque le terminal s'attache au réseau 4G, il envoie à son équipement d'attachement MME une demande explicite de Combined Attach. Sur réception d'une telle commande, le MME identifie le centre de communication mobile évolué MSC-e de la zone locale au terminal et lui envoie une requête pour qu'il prenne en charge les SMS de ce terminal.

Sur réception de cette commande, le MSC-e envoie au HLR une commande au protocole MAP pour que celui-ci achemine les SMS destinés au terminal UE via ce MSC-e.

L'envoi d'un SMS selon la procédure Combined Attach (ou SMSoSGs) est décrit en référence à la figure 2B. Conformément à cette procédure, lorsque le terminal UE désire envoyer un message SMS, il encapsule ce SMS dans un message de la couche NAS (Network Access Stratum) à destination du MME (étape G2).

Le MME transmet ce message via l'interface SGs au MSC-e sélectionné lors de la phase d'attachement réseau Combined IMSI attach (étape G4), puis le MSC-e envoie le SMS en mode circuit comme si ce SMS avait été envoyé depuis un accès radio cellulaire 2G/3G.

Des étapes similaires aux étapes E8 à E14 déjà décrites en référence à la figure 1A sont mises en œuvre notamment.

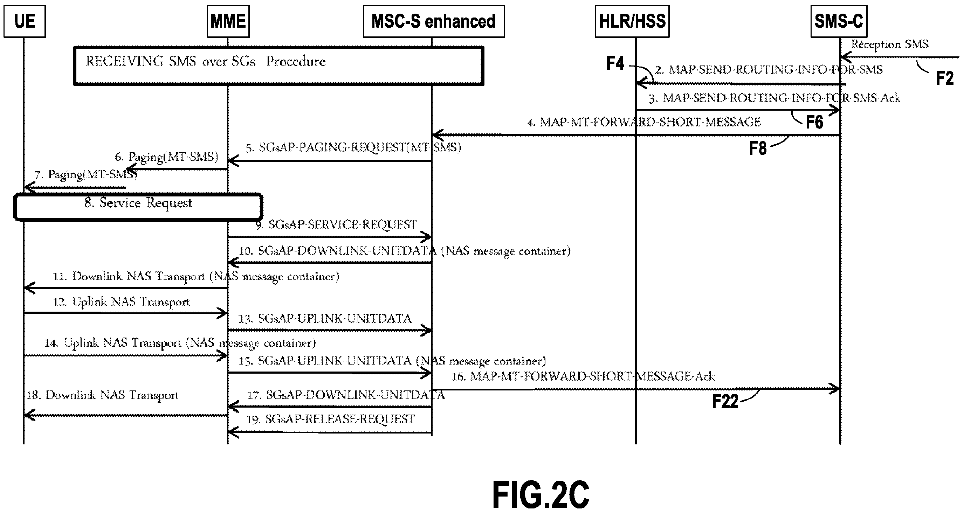

La figure 2C rappelle de la même façon la procédure connue de réception d'un SMS en mode Combined Attach (ou SMSoSGs) ; elle n'est pas détaillée ici.

La procédure Combined Attach présente l'avantage d'être beaucoup plus souple que la procédure de repli CS fallback utilisée pour la gestion des appels téléphoniques. En particulier, elle permet aux clients attachés en 4G de rester en 4G pour l'émission et réception de SMS et donc ne perturbe pas l'expérience client avec une baisse notable de débit, par exemple lorsque le client regarde une vidéo en mode streaming.

Elle requiert en revanche une évolution du V-MSC pour supporter l'interface SGs et induit une charge supplémentaire au niveau du V-MSC.

Cette procédure présente en outre l'inconvénient de ne pas s'appliquer aux terminaux ne déposant que d'une couverture WiFi.

C'est notamment pour palier cet inconvénient que le 3GPP a normalisé le mode d'envoi et de réception de SMS sur réseau IP (en anglais SMS over IP ou « SMSoIP »), mode utilisable dans le domaine PS (Packet Switch), c'est à dire à la fois sous couverture réseau cellulaire 4G avec support de services VxLTE (Voice-Video-etc over LTE) et sous couverture WiFi avec support de services VxWiFi (Voice-Video-etc over WiFi).

Le fonctionnement connu du mode SMSoIP est rappelé en référence aux figures 3A à 3C. Le document US 2005/282565 A1 décrit en particulier un procédé pour délivrer un message de service de messages courts à un équipement utilisateur de réseau local sans fil, ce procédé commençant par enregistrer l'équipement utilisateur avec une passerelle de messages courts de protocole Interne.

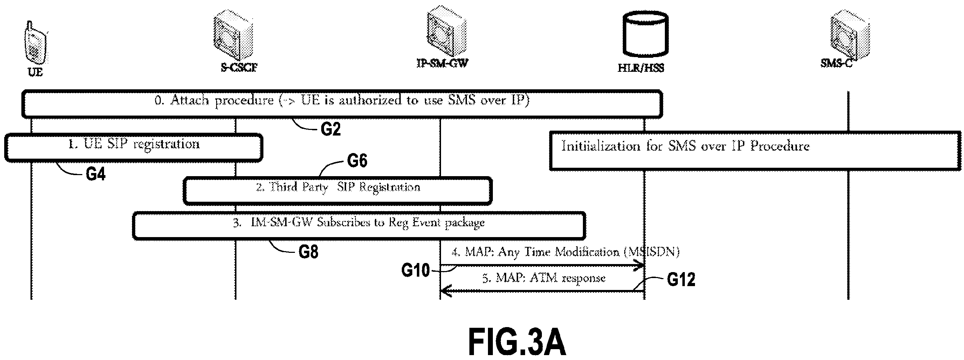

Sur ces figures 3A à 3C, on a représenté une passerelle de gestion des SMS sur réseau IP (en anglais Internet Protocol Short Message Gateway), ci-après « passerelle IP-SM-GW t

Une fois le terminal UE attaché au réseau cellulaire 4G (étape G2), ce dernier s'enregistre (étape G4) via le protocole SIP dans le sous-système IMS c'est-à-dire jusqu'au S-CSCF.

Le S-CSCF prolonge l'enregistrement SIP jusqu'à la passerelle IP-SM-GW via la procédure SIP Third Party Registration (étape G6).

Le message d'enregistrement SIP transmis à la passerelle IP-SM-GW contient, dans le champ AoR (Address of Record), l'identité publique du terminal UE, à savoir son numéro MSISDN.

Cette passerelle IP-SM-GW dispose d'une interface SIP ; elle peut être co-localisée dans le serveur d'application Telephony Application Server, dans un SMS-C, ou dans un équipement autonome. Quelle que soit son implémentation, la passerelle IP-SM-GW est vue du cœur IMS comme un serveur d'application AS.

Après avoir reçu le message SIP d'enregistrement, la passerelle IP-SM-GW peut souscrire de manière optionnelle (étape G8) à l'Event Package Reg (pour Registration) de sorte à être immédiatement informée lorsque terminal UE n'est plus enregistré en cœur de réseau IMS (S-CSCF).

Au cours d'une étape G10, si l'adresse de Contact AoC fournie par le terminal contient une information de support de la fonctionnalité SMS over IP, la passerelle IP-SM-GW envoie au HLR, via une interface MAP, un message MAP ATM (Any Time Modification) request pour lui indiquer que les SMS destinés au terminal UE de numéro MSISDN doivent désormais être acheminés via la passerelle IP-SM-GW et non plus via le V-MSC.

Le HLR confirme la prise en compte de l'adresse de la passerelle IP-SM-GW au cours d'une étape G12.

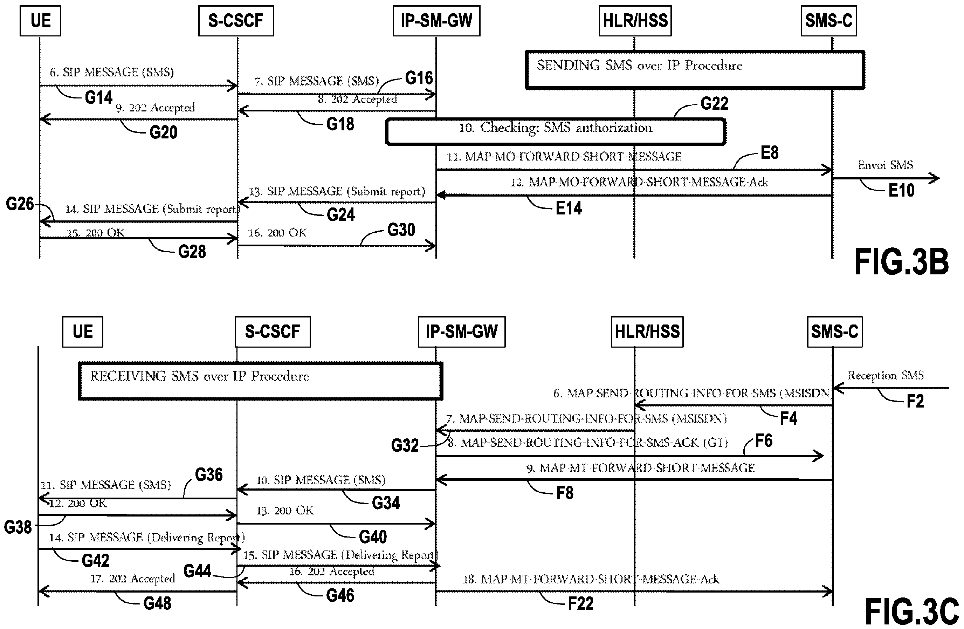

L'envoi d'un SMS en mode SMSoIP est rappelé en référence à la figure 3B.

Au cours d'une étape G14, le SMS est encapsulé par le terminal UE dans un message SIP MESSAGE à destination du S-CSCF (via le P-CSCF non représenté sur les figures pour des raisons de simplification).

Le message SIP MESSAGE est transmis vers la passerelle IP-SM-GW (étape G16); la passerelle IP-SM-GW acquitte la réception du message SIP MESSAGE par l'envoi d'une réponse 202 Accepted au S-CSCF (étape G18). Le S-CSCF relaie la réponse 202 Accepted vers le terminal UE, via le P-CSCF (étape G20).

Au cours d'une étape G22, la passerelle IP-SM-GW consulte le HLR pour vérifier que le terminal UE a les droits d'envoi de SMS.

Si l'envoi de SMS est autorisé, la passerelle IP-SM-GW dés-encapsule le SMS du message SIP MESSAGE et le ré-encapsule dans un message MAP MAP-MO-FORWARD-SHORT-MESSAGE vers le SMS-C (de façon similaire à l'étape E8 déjà décrite). Puis le SMS-C envoie le SMS vers le réseau du destinataire du SMS, de façon similaire à l'étape E10 déjà décrite.

Le SMS-C retourne le rapport d'émission d'envoi du SMS via le message MAP MAP-MO-FORWARD-SHORT-MESSAGE-ACK vers la passerelle IP-SM-GW (de façon similaire à l'étape E14 déjà décrite).

Au cours d'une étape G24, la passerelle IP-SM-GW dés-encapsule du message MAP le rapport d'émission du SMS et le ré-encapsule dans un message SIP MESSAGE puis l'envoie vers le S-CSCF ; le S-CSCF envoie le message SIP MESSAGE vers le terminal UE, via le P-CSCF (étape G26) ; le terminal UE répond 200 OK au S-CSCF, via le P-CSCF (étape G28) pour accuser réception et prise ne compte du message SIP MESSAGE ; le S-CSCF relaie la réponse 200 OK vers la passerelle IP-SM-GW (étape G30).

La réception d'un SMS en mode SMSoIP est rappelée en référence à la figure 3C.

Comme décrit en référence à la figure 1B, le SMS est transmis par l'expéditeur au SMS-C, appartenant ou non à l'opérateur du destinataire, au cours d'une étape similaire à l'étape F2.

Au cours d'une étape similaire à l'étape F4, le SMS-C consulte le HLR via le message MAP-SEND-ROUTING-INFO-FOR-SMS de sorte à fournir au SMS-C l'information de routage du SMS adresse GT « Global Title » de la passerelle IP-SM-GW vue comme un VLR).

Au cours d'une étape G32, le HLR relaie le message à la passerelle IP-SM-GW, la passerelle ayant demandé à l'étape G10 que les SMS destinés à ce numéro MSISDN lui soient routés.

Au cours d'une étape similaire à l'étape F6 déjà décrite, la passerelle IP-SM-GW retourne via le message MAP-ROUTING-INFO-FOR-SMS-ACK l'information de routage GT correspondant à l'adresse de la passerelle IP-SM-GW.

Le SMS-C route alors le SMS vers la passerelle IP-SM-GW via le message MAP MAP-MT-FORWARD-SHORT-MESSAGE, de façon similaire à l'étape F8 déjà décrite.

La passerelle IP-SM-GW dés-encapsule le SMS du message MAP puis le ré-encapsule dans un message SIP MESSAGE avant de l'envoyer vers le S-CSCF (étape G34).

Le S-CSCF transmet via le P-CSCF le message SIP MESSAGE jusqu'au terminal UE (étape G36) ; le terminal UE acquitte la réception du message SIP MESSAGE via l'envoi de la réponse SIP 200 OK vers le S-CSCF (étape G38) ; le S-CSCF relaie la réponse SIP 200 OK vers la passerelle IP-SM-GW (étape G40).

Le terminal UE envoie au S-CSCF, via le P-CSCF, le rapport de livraison du SMS via le message SIP MESSAGE (étape G42) ; le S-CSCF relaie le message SIP MESSAGE vers la passerelle IP-SM-GW (étape G44).

Au cours d'une étape G46, la passerelle IP-SM-GW accuse réception du message SIP MESSAGE via la réponse 202 Accepted transmise au S-CSCF ; le S-CSCF relaie, via le P-CSCF, la réponse 202 Accepted au terminal UE (étape G48).

La passerelle IP-SM-GW envoie le rapport d'envoi du SMS vers le SMS-C via le message MAP MAP MAP-MT-FORWARD-SHORT-MESSAGE-ACK au cours d'une étape similaire à l'étape F22 déjà décrite.

L'envoi et réception de SMS via IP (SMSoIP) peuvent s'appliquer à la couverture cellulaire 4G et à la couverture WiFi dans le cas où le terminal dispose d'une pile IMS VxLTE et/ou VxWiFi et un abonnement approprié auprès de l'opérateur mobile.

On notera que lorsque le terminal UE dispose du service VxWiFi, la seule solution dont il dispose pour émettre ou recevoir des SMS est d'utiliser le mode SMSoIP.

C'est pourquoi, lorsque le terminal s'enregistre en cœur de réseau IMS (étape G4), la passerelle IP-SM-GW est notifiée via le mécanisme Third Party Registration (étape G6) de sorte à ce que cette passerelle IP-SM-GW donne instruction (étape G10) au HLR de router les SMS entrants pour ce terminal vers cette passerelle IP-SM-GW.

Cependant si le terminal UE perd la connectivité WiFi et bascule en 2G/3G ou en 4G (avec ou sans VxLTE), alors le chemin emprunté pour la réception du SMS n'est pas optimal en terme de ressources réseau.

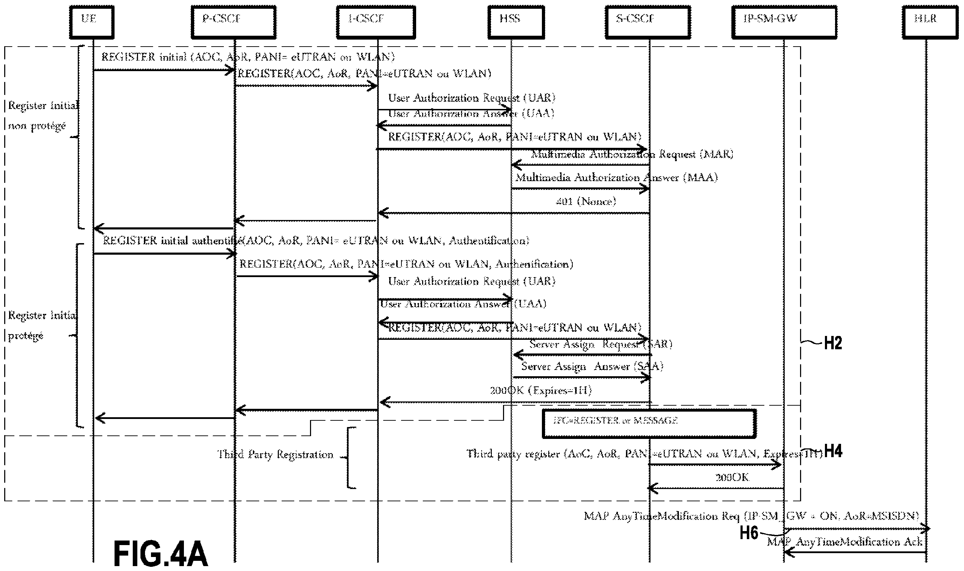

Cette situation va maintenant être illustrée plus précisément en référence aux figures 4A à 4C.

On rappelle, en référence à la figure 4A, que lorsque le terminal UE démarre (bouton ON/OFFdu terminal ou après désactivation du mode avion) sous couverture cellulaire 4G ou WiFi, , il cherche à s'enregistrer en protocole SIP au niveau du coeur de réseau IMS conformément à la procédure d'authentification mutuelle (étape H2).

Au cours de cette procédure, les messages d'enregistrement REGISTER comportent, de façon connue, un champ SIP P-Access-Network-Info, ci-après « PANI », définissant le type d'accès et dont l'un de ses paramètres contient la valeur eUTRAN pour un accès 4G ou WLAN pour un accès WiFi. Le document Gonzalo Camarillo et At., « Chapter 5 Session Control in the IMS", in : "The 3G IP multimédia subsystem (IMS): merging the Internet and the cellular words", publié le 24 août 2011, décrit une utilisation de ce champ PANI.

A la fin de la procédure d'authentification mutuelle, lorsque le réseau répond 200OK (Expire=1H), le terminal est enregistré en cœur de réseau IMS pour une durée de 1 heure.

De façon connue, le terminal doit se ré-enregistrer (enregistrements subséquents) au bout de 50 minutes (=Expires - 10 minutes).

Une fois que le terminal UE est enregistré en cœur de réseau IMS et en particulier au niveau du S-CSCF, la fonction Third Party Registration, permet de notifier la passerelle IP-SM-GW pour lui indiquer que le terminal UE est enregistré en cœur de réseau IMS (étape H4).

Si le terminal indique dans son adresse de contact AoC le support du service SMSoIP, la passerelle IP-SM-GW notifie alors le HLR (étape H6) pour lui indiquer que tous les SMS destinés au terminal UE de numéro MSISDN correspondant au champ AoR (« Address of Record ») doivent être routés vers cette passerelle IP-SM-GW et non plus vers le centre MSC-C sur lequel le terminal UE est accroché en parallèle.

Si le terminal UE a démarré en 4G, le terminal met en œuvre la procédure de réenregistrement toutes les 50 minutes, et à chaque enregistrement subséquent, le S-SCSF informe la passerelle IP-SM-GW du fait que le terminal est toujours enregistré.

Le HLR n'est pas mis à jour par la passerelle IP-SM-GW sur réception des trames Third Party Registration prolongeant ces REGISTER subséquents.

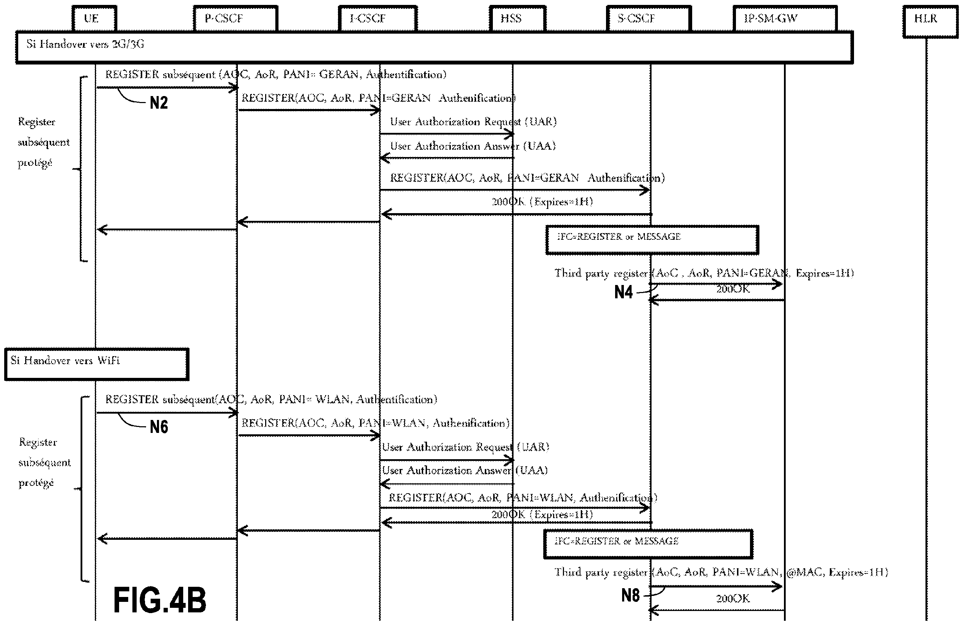

On suppose en référence à la figure 4B, que le terminal UE démarré en 4G effectue une mobilité (handover) vers le réseau cellulaire 2G ou 3G. Certains fournisseurs de terminaux sur demande des opérateurs de télécommunications peuvent choisir de maintenir l'enregistrement SIP sous couverture cellulaire 2G et 3G de sorte à optimiser les échanges protocolaires au sein du réseau de télécommunications et éviter des effets « ping-pong ». D'autres fournisseurs de terminaux peuvent demander aux terminaux de se dé-enregistrer explicitement du réseau IMS lorsque le terminal est enregistré sous couverture 4G et qu'il fait une mobilité sous couverture 2G ou 3G. Dans ce cas, le terminal envoie un message de désenregistrement explicite au réseau IMS (REGISTER avec Expires=0). Dans tous les cas, si le terminal dispose du service VxLTE 4G et du service VxWiFi, l'enregistrement IMS est maintenu lors d'une mobilité 4G vers WiFi et vice et versa de sorte à proposer aux clients une continuité de services entre ces 2 réseaux d'accès.

Si le fournisseur de terminal choisit de maintenir l'enregistrement IMS sous couverture 2G ou 3G, à l'occasion du réenregistrement suivant (étape N2) à l'expiration du timer de réenregistrement subséquent (50 minutes avec Expires=1heure), le terminal envoie un REGISTER subséquent dans lequel le champ SIP PANI est positionné à GERAN ou UTRAN selon que le handover a été effectué vers un réseau cellulaire 2G ou 3G.

La passerelle IP-SM-GW ne remonte aucun message au HLR sur réception de la trame Third Party Registration (étape N4).

Le mécanisme est similaire en cas de handover vers un réseau WiFi, si ce n'est que le terminal UE n'attend pas les 50 minutes pour effectuer l'enregistrement subséquent (étape N6), le champ PANI modifié à la valeur WLAN devant être remonté immédiatement pour le bon routage des appels téléphoniques entrants.

La passerelle IP-SM-GW n'envoie aucun message au HLR sur réception de la trame Third Party Registration (étape N8).

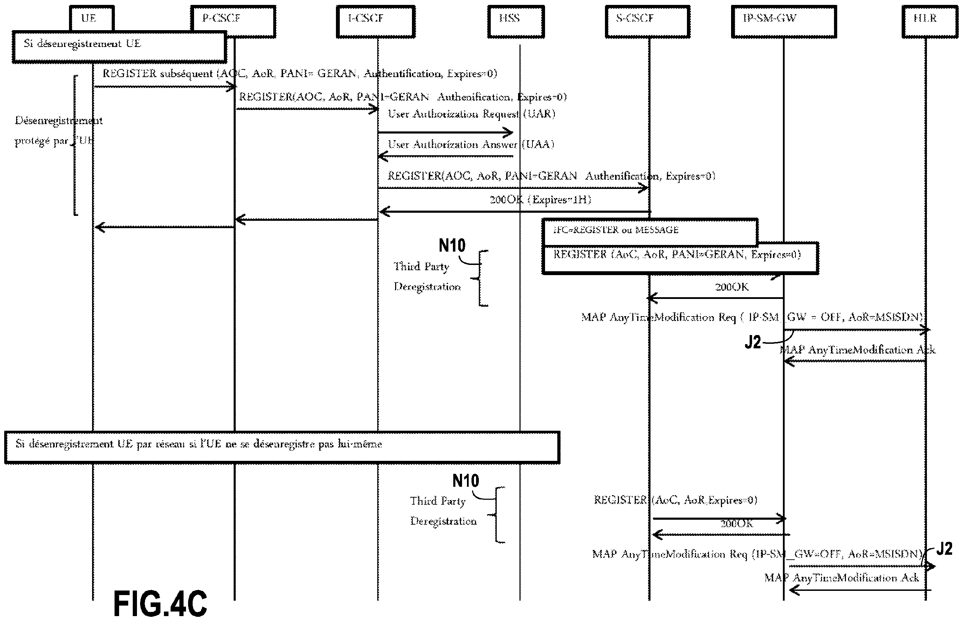

En référence à la figure 4C, le terminal enregistré initialement en 4G et ayant subi une mobilité vers un réseau cellulaire 2G se désenregistre en envoyant un REGISTER avec une valeur EXPIRES égale à 0 (étape N10). Ce mécanisme est le même quel que soit le type de connectivité au moment du dés-enregistrement et quelle que soit la raison du dés-enregistrement, notamment en cas de dés-enregistrement volontaire (par exemple lorsque l'utilisateur configure son terminal en « mode avion » ou arrête son terminal via le bouton ON/OFF) ou de dés-enregistrement à l'initiative du réseau.

Sur réception d'un tel message de désenregistrement, la passerelle IP-SMGW indique au HLR (étape J2) de ne plus router les SMS entrants vers la passerelle IP-SM-GW mais vers le dernier V-MCS utilisé.

En résumé, lors de la perte de couverture WiFi le terminal UE n'a pas le temps de se dés-enregistrer en protocole SIP, si bien que la passerelle IP-SM-GW est informée du désenregistrement du terminal UE tardivement, plus précisément à l'expiration de l'enregistrement courant (1 heure maximum) lorsque le S-CSCF envoie un message SIP DEREGISTER vers la passerelle IP-SM-GW (étape N10) ou via un message NOTIFY RegEvent si la passerelle IP-SM-GW a souscrit à l'événement RegEvent à l'étape G8.

Par conséquent, si un SMS est destiné au terminal UE, il est systématiquement routé, pendant toute cette période de flottement, depuis le SMS-C vers la passerelle IP-SM-GW puis depuis cette passerelle vers le S-CSCF puis vers le terminal destinataire UE via le P-CSCF.

Mais dans ce cas, comme le terminal UE n'est plus joignable en mode paquet (« Packet Switch » PS) mais uniquement en mode circuit (circuit switch « CS »), un code erreur est retourné à la passerelle IP-SM-GW soit par le S-CSCF, soit par le P-CSCF.

La passerelle IP-SM-GW utilise alors le mode CS-Retry pour interroger le HLR via le protocole MAP pour rechercher l'adresse du V-MSC sur lequel le terminal UE est attaché (en mode normal pour une couverture réseau 2G/3G ou en mode combined Attach pour une couverture 4G) afin de router le SMS vers cet équipement.

L'utilisation des ressources réseau n'est donc pas optimale.

L'invention vise une méthode de gestion des SMS qui remédie à ces problèmes, au moins en partie.

### Objet et résumé de l'invention

L'invention est définie dans les revendications.

Ainsi, et selon un premier aspect l'invention concerne un procédé de gestion des SMS mis en œuvre par une passerelle placée en coupure de flux entre une entité S-CSCF et une entité HLR dans un réseau de télécommunications, ledit procédé comportant :
- une étape de réception d'une trame Third Party Registration comportant l'identifiant d'un terminal ;
- une étape d'envoi d'un message de configuration à ladite entité HLR, ladite configuration ayant pour effet que les SMS destinés audit terminal transitent ou non via ladite passerelle, ledit procédé étant caractérisé en ce qu'il comporte :
- une étape d'obtention, à partir de ladite trame, d'une information représentative du type de réseau d'accès auquel est connecté ledit terminal ; et en ce que
- l'envoi et le contenu dudit message de configuration sont déterminés en fonction dudit type de réseau d'accès.

Corrélativement, l'invention concerne une passerelle placée en coupure de flux entre une entité S-CSCF et une entité HLR dans un réseau de télécommunications, ladite passerelle comportant:
- un module de communication apte à recevoir une trame Third Party Registration comportant l'identifiant d'un terminal ;
- le module de communication étant apte à envoyer un message de configuration à ladite entité HLR, ladite configuration ayant pour effet que les SMS destinés audit terminal transitent ou non via ladite passerelle, ladite passerelle étant caractérisée en ce qu'elle comporte :
- un module d'analyse configuré pour obtenir, à partir de la trame, une information représentative du type de réseau d'accès auquel est connecté ledit terminal ; et en ce que
- l'envoi et le contenu dudit message de configuration étant déterminés en fonction dudit type de réseau d'accès.

Ainsi, et d'une façon générale, l'invention vise une solution permettant à un opérateur de réseau mobile de choisir le mode de communication des SMS destinés à un terminal en déclarant ou non, pour ce terminal, la passerelle de gestion des SMS sur réseau IP auprès du HLR associé à ce terminal en fonction du type d'accès avec lequel le terminal accède au réseau.

L'invention est particulièrement simple à mettre en œuvre car seule la passerelle de gestion des SMS sur réseau IP est impactée par l'invention.

Dans un mode particulier de réalisation, la trame Third Party Registration est une trame notifiant la passerelle du fait que le terminal vient de s'enregistrer pour la première fois en cœur de réseau IMS, la passerelle envoyant un message pour s'enregistrer auprès du HLR uniquement si elle détecte que le terminal accède au réseau en mode WiFi.

L'invention permet ainsi à un opérateur, pour un terminal supportant les services VxLTE et VxWiFi, d'utiliser le mode SMSoSGs lorsque le terminal utilise le service VxLTE sous couverture 4G et le mode SMSoIP lorsque le terminal utilise le service VxWiFi sous couverture WiFi.

Dans un mode particulier de réalisation, la trame Third Party Registration est une trame notifiant la passerelle du fait que le terminal vient de s'enregistrer pour la première fois en cœur de réseau IMS, la passerelle envoyant un message pour s'enregistrer auprès du HLR uniquement si elle détecte que le terminal accède au réseau en mode WiFi ou en mode 4G.

Dans un mode particulier de réalisation, la trame Third Party Registration est une trame notifiant la passerelle du fait que le terminal se réenregistre en cœur de réseau IMS, la passerelle envoyant un message pour se dés-enregistrer auprès du HLR si elle détecte que le terminal accède au réseau en mode 2G ou 3G.

L'invention évite ainsi les problèmes de l'état actuel de la technique selon lesquels les SMS destinés à un terminal continuent à être envoyés selon le mode SMSoIP alors que le terminal est en mode CS 2G ou 3G suite à une procédure de hand over.

Dans un mode particulier de réalisation, la trame Third Party Registration est une trame notifiant la passerelle du fait que le terminal se réenregistre en cœur de réseau IMS, la passerelle envoyant un message pour s'enregistrer auprès du HLR uniquement si elle détecte que le terminal accède au réseau en mode WiFi.

Ce mode de réalisation permet de rebasculer en mode SMSoIP lorsque le terminal retrouve une connection WiFi.

Au niveau du terminal UE, il est préférable mais pas indispensable qu'à chaque changement de réseau d'accès (2G, 3G, 4G ou WiFi), le message SIP REGISTER soit envoyé vers le réseau IMS de sorte à informer immédiatement le cœur IMS et donc l'IP-SM-GW de changement de PANI de sorte à activer/désactiver le service SMSoIP dans les meilleurs délais.

Les caractéristiques et avantages particuliers de la passerelle selon l'invention sont similaires à ceux présentés ci-dessus pour le procédé de gestion de SMS selon l'invention et ils ne seront pas rappelés ici.

Dans un mode particulier de réalisation, au moins une partie de ses différentes étapes du procédé de gestion des SMS sont déterminées par des instructions de programmes d'ordinateurs.

En conséquence, l'invention vise aussi un programme d'ordinateur sur un support d'informations, ce programme étant susceptible d'être mis en œuvre dans un ordinateur, ce programme comportant des instructions adaptées à la mise en œuvre d'étapes d'un procédé de gestion des SMS tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- les figures 1A et 1B illustrent des procédures d'envoi et de réception de SMS en mode circuit sur réseau d'accès cellulaire 2G/3G conformes à l'art antérieur ;
- les figures 2A à 2C illustrent des procédures d'envoi et de réception de SMS selon le mode SMSoSGs conforme à l'art antérieur ;
- les figures 3A à 3C illustrent des procédures d'envoi et de réception de SMS selon le mode SMSoIP conforme à l'art antérieur ;
- les figures 4A à 4C illustrent des inconvénients des méthodes de gestion de SMS conformes à l'art antérieur ;
- les figures 5A et 5B illustrent un procédé de gestion des SMS conforme à un mode particulier de réalisation de l'invention ;
- la figure 6 représente l'architecture matérielle d'une passerelle conforme à un mode particulier de réalisation de l'invention.

### Description détaillée d'un mode de réalisation de l'invention

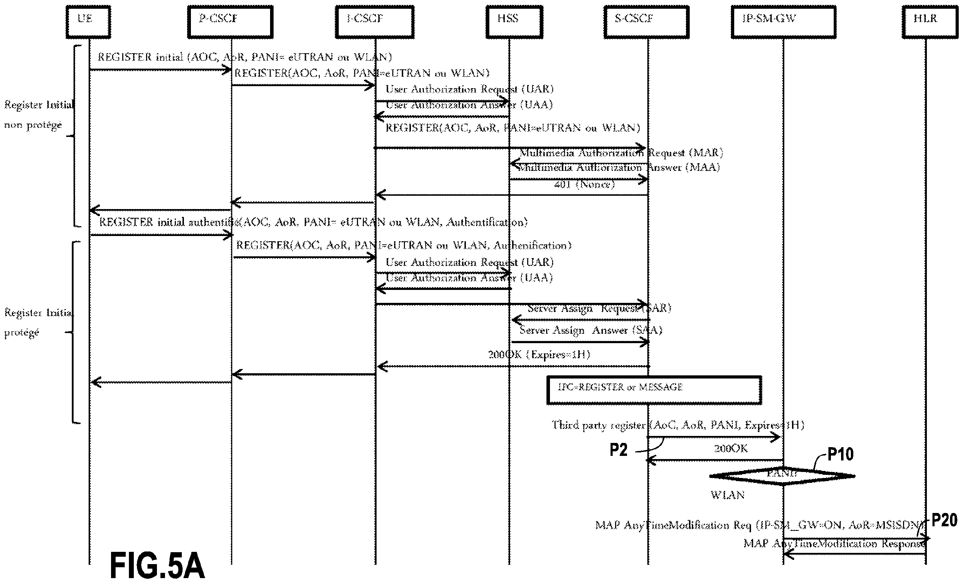

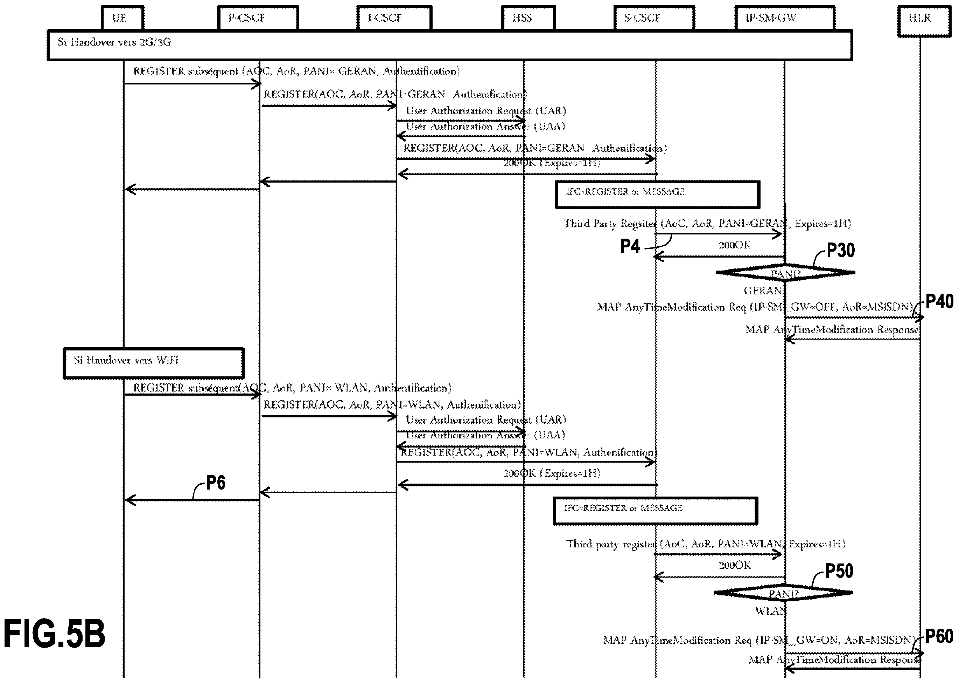

Un procédé de gestion des SMS conforme à un mode particulier de réalisation va maintenant être décrit en référence aux figures 5A et 5B.

En référence à la figure 5A, on considère un terminal mobile UE avec la fonction SMSoIP activée (présence dans son adresse de contact AoC du support SMSoIP) qui accède initialement au réseau via un réseau d'accès de type 4G ou WiFi.

De façon connue, la trame Third Party Registration envoyée à la passerelle IP-SM-WG comporte (étape P2) un champ SIP PANI dont la valeur est eUTRAN si l'accès du terminal se fait par un réseau 4G ou WLAN si cet accès se fait par un réseau WiFi.

Conformément à l'invention, la passerelle IP-SM-WG détermine la valeur du champ PANI au cours d'une étape P10.

Dans le mode de réalisation décrit ici, la passerelle IP-SM-GW s'enregistre auprès de l'entité HLR (étape P20) uniquement si le PANI comporte la valeur WLAN représentative du fait que le terminal est connecté à un réseau d'accès WiFi.

Ce mode de réalisation de l'invention permet d'optimiser l'utilisation des ressources réseau.

En effet, dans ce mode de réalisation, dès lors que le terminal est connecté via un réseau d'accès d'un autre type, par exemple en 4G, les SMS destinés à ce terminal ne transitent pas par la passerelle IP-SM-GW. On rappelle que dans cette situation en effet, le terminal a nécessairement mis en œuvre la procédure Combined Attach au moment où il a effectué sa demande d'attachement au réseau 4G, de sorte que le HLR a été configuré pour que les SMS destinés à ce terminal soient pris en charge par le MSC-e associé à la zone locale du terminal.

Dans le mode de réalisation décrit ici, si la passerelle détermine à l'étape P10 que le terminal accède au réseau en mode WiFi (PANI=WLAN), elle s'enregistre auprès du HLR au cours d'une étape P20 pour que les SMS destinés au terminal UE soient routés vers elle. Elle envoie à cet effet un message de configuration MAP AnyTimeModificationRequest pour activer son adresse dans le HLR pour les messages destinés au terminal UE dont le MSISDN correspond au champ AoR.

En variante, la passerelle IP-SM-GW s'enregistre auprès du HLR dès lors qu'elle détermine à l'étape P10 que le terminal UE est connecté via un réseau d'accès de type 4G ou WiFi.

En référence à la figure 5B, on suppose que le terminal configuré pour maintenir son enregistrement IMS sur tous les types d'accès qui s'était enregistré initialement en mode WiFi, a perdu sa connexion et effectue un handover vers un réseau cellulaire 2G.

Le terminal s'étant initialement enregistré en mode WiFi, la passerelle s'est déclarée auprès du HLR pour que les SMS destinés au terminal UE lui soient routés.

Comme mentionné précédemment, le REGISTER subséquent suivant la procédure de handover vers le réseau 2G (éventuellement 50 minutes après le précédent) comporte un champ SIP PANI dont la valeur est GERAN (étape P4).

Lorsque la passerelle IP-SM-GW reçoit la trame Third Party Registration, elle analyse ce champ au cours d'une étape P30 et détermine, dans ce mode de réalisation de l'invention qu'elle doit se désenregistrer auprès du HLR (étape P40). Elle envoie à cet effet un message de configuration MAP AnyTimeModificationRequest pour désactiver son adresse dans le HLR pour les messages destinés au terminal UE dont le MSISDN correspond au champ AoR.

Ce désenregistrement a pour effet que les SMS destinés au terminal UE ne transitent plus par la passerelle IP-SM-GW mais via le V-MSC.

Toujours en référence à la figure 5B, on suppose que le terminal UE repasse en mode WiFi. Comme mentionné précédemment, et de façon connue, ce rattachement au réseau WiFi entraîne un REGISTER subséquent immédiat (étape P6).

Dans le mode de réalisation décrit ici, si la passerelle détermine à l'étape P50 que le terminal accède au réseau en mode WiFi (PANI=WLAN), elle s'enregistre auprès du HLR au cours d'une étape P60 pour que les SMS destinés au terminal UE soient à nouveau routés vers elle. Elle envoie à cet effet un message de configuration MAP AnyTimeModificationRequest pour activer son adresse dans le HLR pour les messages destinés au terminal UE dont le MSISDN correspond au champ AoR.

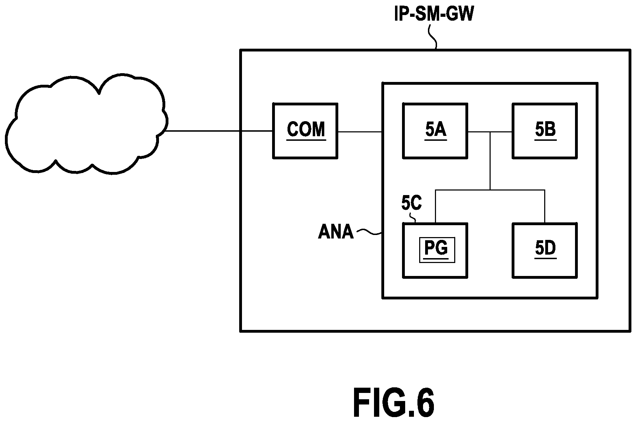

La figure 6 représente l'architecture matérielle d'une passerelle IP-SM-GW conforme à un mode de réalisation de l'invention.

Cette plateforme comporte un module de communication COM permettant à la plateforme d'émettre et recevoir des messages d'autres entités à travers un réseau de communication. Ces moyens de communication sont en particulier adaptés pour communiquer avec une entité S-SCSF et une entité HLR conformément au protocole SIP et au protocole MAP. Ils permettent en particulier à la passerelle de recevoir des trames de type Third Party Registration d'un S-CSCF et d'émettre à un HLR des messages de type MAP AnyTimeModification.

Dans le mode de réalisation décrit ici, la passerelle IP-SM-GW présente l'architecture matérielle d'un ordinateur. Elle comporte un module d'analyse (ANA) comprenant un processeur 5A, une mémoire vive 5B, une mémoire morte 5C et une mémoire flash non volatile 5D. La mémoire morte 5C constitue un support d'enregistrement conforme à l'invention, lisible par le processeur 5A et sur lequel est enregistré un programme d'ordinateur conforme à l'invention, comportant des instructions pour l'exécution des étapes d'un procédé de gestion des SMS conforme à l'invention décrites précédemment en référence aux figures 5A et 5B.

## Revendications

1. Procédé de gestion de messages courts SMS, Short Message Service, mis en oeuvre par une passerelle placée en coupure de flux entre une entité S-CSCF et un registre de localisation d'origine dans un réseau de télécommunications, ledit procédé comportant :
- une étape de réception (P2) d'une trame Third Party Registration comportant l'identifiant d'un terminal ;
- une étape d'envoi (P20) d'un message de configuration audit registre de localisation d'origine,
ledit procédé étant **caractérisé en ce que** ladite configuration a pour effet que les SMS destinés audit terminal transitent ou non via ladite passerelle, et **en ce qu'**il comporte :
- une étape de détermination (P10) du type de réseau d'accès auquel est connecté ledit terminal à partir du champ SIP P-Access-Network-Info compris dans ladite trame; et **en ce que**
- l'envoi et le contenu dudit message de configuration sont déterminés en fonction dudit type de réseau d'accès.

2. Procédé selon la revendication 1, dans lequel ladite trame Third Party Registration est une trame notifiant ladite passerelle du fait que ledit terminal vient de s'enregistrer pour la première fois en cœur de réseau IMS, ladite passerelle envoyant un message pour s'enregistrer auprès du registre de localisation d'origine uniquement si elle détecte que le terminal accède au réseau en mode WiFi.

3. Procédé selon la revendication 1, dans lequel ladite trame Third Party Registration est une trame notifiant ladite passerelle du fait que ledit terminal vient de s'enregistrer pour la première fois en cœur de réseau IMS, ladite passerelle envoyant un message pour s'enregistrer auprès du registre de localisation d'origine uniquement si elle détecte que le terminal accède au réseau en mode WiFi ou en mode 4G.

4. Procédé selon la revendication 1, dans lequel ladite trame Third Party Registration est une trame notifiant ladite passerelle du fait que ledit terminal se réenregistre en cœur de réseau IMS, ladite passerelle envoyant un message pour se dés-enregistrer auprès du registre de localisation d'origine si elle détecte que le terminal accède au réseau en mode 2G ou 3G.

5. Procédé selon la revendication 1, dans lequel ladite trame Third Party Registration est une trame notifiant ladite passerelle du fait que ledit terminal se réenregistre en cœur de réseau IMS, ladite passerelle envoyant un message pour s'enregistrer auprès du registre de localisation d'origine uniquement si elle détecte que le terminal accède au réseau en mode WiFi.

6. Passerelle placée en coupure de flux entre une entité S-CSCF et un registre de localisation d'origine dans un réseau de télécommunications, ladite passerelle comportant:
- un module de communication apte à recevoir une trame Third Party Registration comportant l'identifiant d'un terminal;
- le module de communication étant apte à envoyer un message de configuration audit registre de localisation d'origine,
ladite passerelle étant **caractérisée en ce que** ladite configuration a pour effet que les messages courts SMS, Short Message Service, destinés audit terminal transitent ou non via ladite passerelle et **en ce qu'**elle comporte :
- un module d'analyse (ANA) configuré pour déterminer le type de réseau d'accès auquel est connecté ledit terminal à partir du champ SIP P-Access-Network-Info compris dans ladite trame; et **en ce que**
- l'envoi et le contenu dudit message de configuration sont déterminés en fonction dudit type de réseau d'accès.

7. Programme d'ordinateur comportant des instructions pour l'exécution des étapes d'un procédé de gestion de messages courts SMS selon l'une quelconque des revendications 1 à 5 lorsque ces instructions sont exécutées par un ordinateur d'une passerelle placée en coupure de flux entre une entité S-CSCF et un registre de localisation d'origine dans un réseau de télécommunications.

8. Support d'enregistrement (5C) lisible par un ordinateur d'une passerelle placée en coupure de flux entre une entité S-CSCF et un registre de localisation d'origine dans un réseau de télécommunications, ordinateur sur lequel est enregistré un programme d'ordinateur comprenant des instructions pour l'exécution desdites étapes d'un procédé de gestion de messages courts SMS selon l'une quelconque des revendications 1 à 5.

## Patentansprüche

1. Verfahren zur Verwaltung von SMS-, Short-Message-Service-, Kurznachrichten, das von einem Gateway umgesetzt wird, der im Strom zwischen einer S-CSCF-Einheit und einem Heimatortsregister in einem Telekommunikationsnetz platziert ist, das Verfahren aufweisend:
- einen Schritt des Empfangens (P2) eines Third-Party-Registration-Rahmens, der die Kennung eines Endgeräts aufweist;
- einen Schritt des Sendens (P20) einer Konfigurationsnachricht an das Heimatortsregister,
wobei das Verfahren **dadurch gekennzeichnet ist, dass** die Konfiguration bewirkt, dass die SMS, die für das Endgerät bestimmt sind, über den Gateway laufen oder nicht, und dadurch, dass es Folgendes aufweist:
- einen Schritt des Bestimmens (P10) des Typs des Zugangsnetzes, mit dem das Endgerät verbunden ist, ausgehend von dem Feld SIP P-Access-Network-Info, das in dem Rahmen enthalten ist; und dadurch, dass
- die Sendung und der Inhalt der Konfigurationsnachricht in Abhängigkeit vom Typ des Zugangsnetzes bestimmt werden.

2. Verfahren nach Anspruch 1, wobei der Third-party-Registration-Rahmen ein Rahmen ist, der den Gateway darüber benachrichtigt, dass sich das Endgerät zum ersten Mal im IMS-Netzwerkkern registriert hat, wobei der Gateway nur dann eine Nachricht sendet, um sich beim Heimatortsregister zu registrieren, wenn er feststellt, dass das Endgerät im WiFi-Modus auf das Netz zugreift.

3. Verfahren nach Anspruch 1, wobei der Third-party-Registration-Rahmen ein Rahmen ist, der den Gateway darüber benachrichtigt, dass sich das Endgerät zum ersten Mal im IMS-Netzwerkkern registriert hat, wobei der Gateway nur dann eine Nachricht sendet, um sich beim Heimatortsregister zu registrieren, wenn er feststellt, dass das Endgerät im WiFi-Modus oder im 4G-Modus auf das Netz zugreift.

4. Verfahren nach Anspruch 1, wobei der Third-party-Registration-Rahmen ein Rahmen ist, der den Gateway darüber benachrichtigt, dass sich das Endgerät erneut im IMS-Netzwerkkern registriert, wobei der Gateway eine Nachricht sendet, um sich beim Heimatortsregister zu entregistrieren, wenn er feststellt, dass das Endgerät im 2G- oder 3G-Modus auf das Netz zugreift.

5. Verfahren nach Anspruch 1, wobei der Third-party-Registration-Rahmen ein Rahmen ist, der den Gateway darüber benachrichtigt, dass sich das Endgerät erneut im IMS-Netzwerkkern registriert, wobei der Gateway nur dann eine Nachricht sendet, um sich beim Heimatortsregister zu registrieren, wenn er feststellt, dass das Endgerät im WiFi-Modus auf das Netz zugreift.

6. Gateway, der im Strom zwischen einer S-CSCF-Einheit und einem Heimatortsregister in einem Telekommunikationsnetz platziert ist, der Gateway aufweisend:
- ein Kommunikationsmodul, das geeignet ist, einen Third-Party-Registration-Rahmen zu empfangen, der die Kennung eines Endgeräts aufweist;
- wobei das Kommunikationsmodul geeignet ist, eine Konfigurationsnachricht an das Heimatortsregister zu senden,
wobei der Gateway **dadurch gekennzeichnet ist, dass** die Konfiguration bewirkt, dass die SMS-, Short-Message-Service-, Kurznachrichten, die für das Endgerät bestimmt sind, über den Gateway laufen oder nicht, und dadurch, dass er Folgendes aufweist:
- ein Analysemodul (ANA), das dazu ausgebildet ist, den Typ des Zugangsnetzes, mit dem das Endgerät verbunden ist, ausgehend von dem Feld SIP P-Access-Network-Info, das in dem Rahmen enthalten ist, zu bestimmen; und dadurch, dass
- die Sendung und der Inhalt der Konfigurationsnachricht in Abhängigkeit vom Typ des Zugangsnetzes bestimmt werden.

7. Computerprogramm aufweisend Anweisungen zur Ausführung der Schritte eines Verfahrens zur Verwaltung von SMS-Kurznachrichten nach einem der Ansprüche 1 bis 5, wenn diese Anweisungen von einem Computer eines Gateways ausgeführt werden, der im Strom zwischen einer S-CSCF-Einheit und einem Heimatortsregister in einem Telekommunikationsnetz platziert ist.

8. Computerlesbares Speichermedium (5C) eines Gateways, der im Strom zwischen einer S-CSCF-Einheit und einem Heimatortsregister in einem Telekommunikationsnetz platziert ist, wobei auf dem Computer ein Computerprogramm gespeichert ist, das Anweisungen zur Ausführung der Schritte eines Verfahrens zur Verwaltung von SMS-Kurznachrichten nach einem der Ansprüche 1 bis 5 umfasst.

## Claims

1. SMS (Short Message Service) short message management method, implemented by a gateway positioned across a flow between an S-CSCF entity and a home location register in a telecommunications network, said method including:
- a step (P2) of receiving a Third Party Registration frame including the identifier of a terminal;
- a step (P20) of sending a configuration message to said home location register,
said method being **characterized in that** said configuration results in the SMSs destined for said terminal transiting or not transiting via said gateway, and **in that** it includes:
- a step (P10) of determining the type of access network to which said terminal is connected on the basis of the SIP P-Access-Network-Info field included in said frame; and **in that**
- the sending and the content of said configuration message are determined on the basis of said type of access network.

2. Method according to Claim 1, wherein said Third Party Registration frame is a frame notifying said gateway of the fact that said terminal has just registered for the first time in the IMS core network, said gateway sending a message to register with the home location register only if it detects that the terminal is accessing the network in WiFi mode.

3. Method according to Claim 1, wherein said Third Party Registration frame is a frame notifying said gateway of the fact that said terminal has just registered for the first time in the IMS core network, said gateway sending a message to register with the home location register only if it detects that the terminal is accessing the network in WiFi mode or in 4G mode.

4. Method according to Claim 1, wherein said Third Party Registration frame is a frame notifying said gateway of the fact that said terminal is reregistering in the IMS core network, said gateway sending a message to deregister from the home location register if it detects that the terminal is accessing the network in 2G or 3G mode.

5. Method according to Claim 1, wherein said Third Party Registration frame is a frame notifying said gateway of the fact that said terminal is reregistering in the IMS core network, said gateway sending a message to register with the home location register only if it detects that the terminal is accessing the network in WiFi mode.

6. Gateway positioned across a flow between an S-CSCF entity and a home location register in a telecommunications network, said gateway including:
- a communication module able to receive a Third Party Registration frame including the identifier of a terminal;
- the communication module being able to send a configuration message to said home location register, said gateway being **characterized in that** said configuration results in the SMS (Short Message Service) short messages destined for said terminal transiting or not transiting via said gateway, and **in that** it includes:
- an analysis module (ANA) configured to determine the type of access network to which said terminal is connected on the basis of the SIP P-Access-Network-Info field included in said frame; and **in that**
- the sending and the content of said configuration message are determined on the basis of said type of access network.

7. Computer program including instructions for executing the steps of an SMS short message management method according to any one of Claims 1 to 5 when these instructions are executed by a computer of a gateway positioned across a flow between an S-CSCF entity and a home location register in a telecommunications network.

8. Recording medium (5C) able to be read by a computer of a gateway positioned across a flow between an S-CSCF entity and a home location register in a telecommunications network and on which there is recorded a computer program comprising instructions for executing said steps of an SMS short message management method according to any one of Claims 1 to 5.
